# EUROPEAN PATENT SPECIFICATION

(11) **EP 1 105 200 B1**
(45) Date of publication and mention of the grant of the patent: **19.03.2003**
(21) Application number: 99931368.7
(22) Date of filing: 08.07.1999
(51) Int. Cl.: B01D 27/08, B01D 29/15, B01D 29/92, B01D 29/96, B01D 35/30

(54) **FILTER ASSEMBLIES**
FILTERANORDNUNGEN
ENSEMBLES FILTRES

(30) Priority: 22.07.1998 GB 9816005; 12.03.1999 GB 9905776
(43) Date of publication of application: 13.06.2001
(73) Proprietor: Pall Corporation, East Hills, New York 11548 (US)
(72) Inventor: ROTHWELL, Charles Nicholas, Ewell, Surrey KT19 0PF (GB)
(74) Representative: Knott, Stephen Gilbert
(86) International application number: GB9902179
(87) International publication number: WO00004973

(56) References cited:
- EP-A- 0 492 627
- US-A- 5 026 478
- US-A- 5 620 599

## Description

The invention relates to filter assemblies.

One form of known filter assembly comprises a filter element contained within a housing. The housing comprises an inlet for feeding fluid to be filtered to the filter element and an outlet for removing filtered fluid. In the course of such filtration, the filter element becomes progressively more blocked with material removed from the fluid until the filter element must be changed. To do this, the housing is opened and the filter element removed, disposed of and replaced.

This can be a messy job because there will be residual fluid within the housing and material removed by the filter element may flow from the filter element as it is taken out of the housing. As well as being messy, such removal can be dangerous where the fluid being filtered presents a health hazard.

There have been various proposals for overcoming this problem. In US-A-3344925, the housing is lined with a liner whose upper edges can be lifted and folded round the filter element to lift the filter element from the housing. GB-A-2176126 connects the filter element to an adapter and then provides a thin sleeve of film-like material surrounding the element. EP-A-0555740 is similar to US-A-3344925 in providing a bag within the housing that can be drawn up to enclose the filter element after the lid has been detached. US-A-3684100 has the element in a shell of thin plastic material closed at one end and open at the other end. EP-A-0492 627 discloses a filter assembly comprising a casing surrounding the filter element and having a head member with an inlet port leading to the exterior surface of the filter element and an outlet leading from the interior surface thereof. According to the invention, there is provided a filter assembly comprising a filter element having a first end and a second end, a casing surrounding the element, the casing being formed by a head member providing an inlet and an outlet and a self supporting bowl connected to the head member and receiving the filter element, and a housing containing the casing characterized in that the first end of the filter element is mounted on said head member, with the inlet and the outlet on the head member extending through the housing for connection to a supply of fluid to be filtered and a receiver for receiving filtered fluid respectively.

By "self-supporting" is meant that the bowl will support itself and maintain its shape at room temperatures when not in use.

It can also be a problem in known filter assemblies of this kind where the filter element has an open centre. This is, after use, filled with a volume of fluid that must be disposed of with the filter element.

The filter element may have an open centre through which fluid flows in the path thereof between the inlet and the outlet, the centre containing a member that reduces the volume of the core.

A further problem with known filter assemblies of this kind is of passing fluid to and from interior and exterior surfaces of the filter element.

The filter element may be tubular with a hollow centre, an interior surface and an exterior surface, a head member providing an end cap for an end of the filter element and also providing a first passage leading to the centre of the filter element and a second passage leading to the exterior surface of the filter element.

In known filter assemblies of this kind, cost is a significant factor. It is desirable to keep the number of parts to a minimum.

The filter member may be tubular having a first end and a second end, the first end being closed by a head member providing a first passage and a second passage and the second end being closed by an end cap, the head member including a part which is substantially the same as the end cap and has a hole leading to the first passage.

The following is a more detailed description of some embodiments of the invention, by way of example, reference being made to the accompanying drawings in which:-
Figure 1 is a schematic cross-section, partly broken away, of a first filter assembly showing a housing, a casing and a filter element,
Figure 2 is a plan view from above of a tie tube of the filter assembly of Figure 1, and
Figure 3 is a schematic cross-section, partly broken away, of a second filter assembly showing a housing, a casing and a filter element.

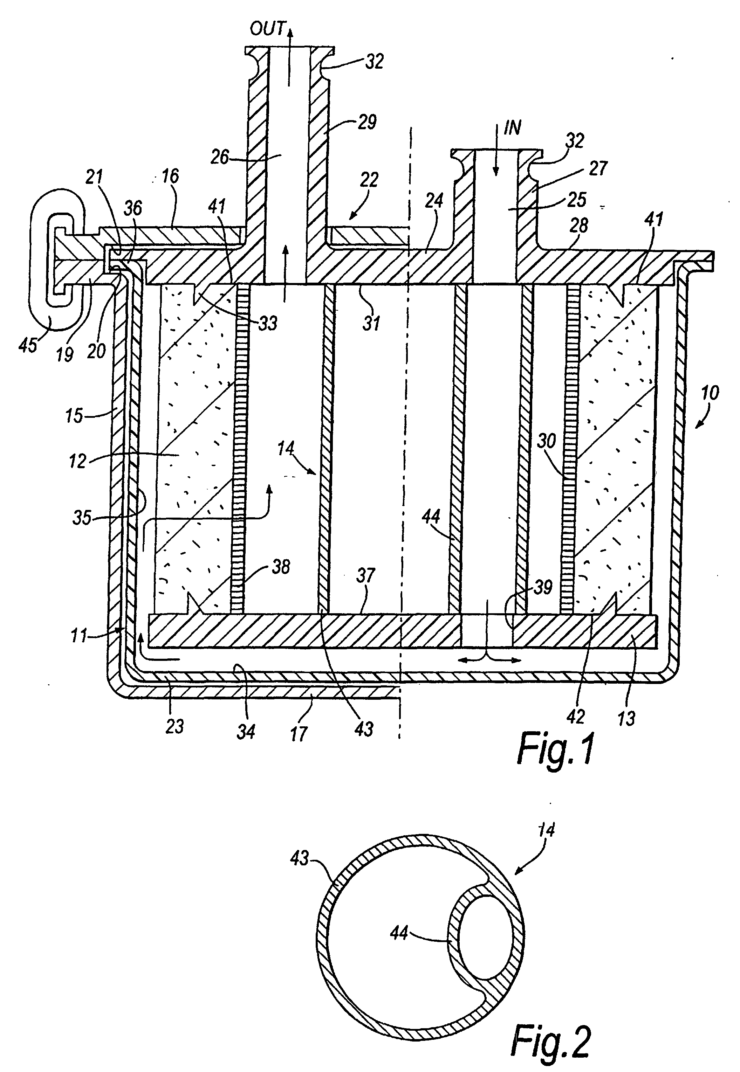

Referring to Figure 1, the first filter assembly comprises a housing indicated generally at 10, a casing indicated generally at 11, a filter element 12, an end cap 13 and a tie tube 14.

The housing 10 is made of metal, for example stainless steel, and comprises a container 15 and a lid 16. The container 15 has a circular base 17 surrounded by an annular side wall 18 which terminates at its upper end in an outwardly directed annular flange 19. The radially inner end of the upper surface of the outwardly directed flange 59 is formed with a step 20 for a purpose to be described below.

The lid 16 is generally circular with a diameter that is generally equal to the diameter of the container 15 across the flange 19. The lid 16 has an outer peripheral surface that mates with the flange 19 and can be connected to the flange 19 by fixing means, such as bolts (not shown) or clamps (shown schematically at 45). As seen in Figure 1, the lid 16 is provided with a step 21 that is in register with the step 20 in the annular flange 19 to form an annular channel extending around the container 15 between the flange 19 and the lid 16.

The casing 11 is formed from suitable plastics materials and comprises a head 22 and a bowl 23. The head 22 is moulded and comprises a generally disc-shaped body 24 formed with an inlet passage 25 and an outlet passage 26. The inlet passage 25 continues through an inlet tube 27 projecting upwardly from an upper surface 28 of the head 22. Similarly, the outlet passage 26 continues through an outlet tube 29 projecting upwardly from the upper surface 28 of the body 24. The inlet passage 25 and the outlet passage 26 both open on to lower surface 31 of the body 24.

Both the inlet tube 27 and the outlet tube 29 are provided at their upper ends with respective annular grooves 32 extending around the outer surface of the associated tube 27,29. These grooves 32 are for receiving connectors (not shown) at the ends of respective inlet and outlet pipes to form fluid-tight couplings between such pipes and the tubes 27,29. Of course, other end shapes could be provided for co-operation with different connectors.

The inner surface 31 of the body 24 is provided with an annular projecting knife edge 33. This extends into the filter element 12 in a manner that will be described below.

The bowl 23 is moulded from a plastics material. This may be translucent. The bowl 23 is of similar shape to the container 15 with a circular base 34 surrounded by an upstanding annular side wall 35 terminating at its upper end in an outwardly directed annular flange 36. The diameter of the bowl base 34 and the bowl side wall 35 are of lesser diameter than the diameter of the casing container base 17 and the container side wall 18. The bowl 23 is self-supporting which is to say that the bowl 23 will maintain its shape when standing on a surface at room temperatures and when not in use. In order to achieve this, the thickness of the bowl 23 may be generally greater than 0.50mm.

The annular flange 36 of the bowl 23 is welded to the periphery of the lower surface 31 of the head 22. This thus forms a closed casing with access only through the inlet tube 27 and the outlet tube 29. As seen in the drawing, the welded peripheral edge of the head 22 and the bowl annular flange 36 are received within the channel formed between the steps 20,21 in the housing 10. This locates the casing 11 in the housing 50.

The end cap 13 is moulded from a suitable plastics material and is generally disc-shaped. The end cap 13 has an upper surface 37 formed with an annular knife edge 38 and has an aperture 39 extending between the upper surface 37 and a lower surface 40. The aperture 39 is offset from the centre of the end cap 13 and its function will be described below.

The filter element 12 is generally cylindrical with a cylindrical outer surface and with a cylindrical inner surface surrounding an open centre of the element 12. It may be formed from any suitable material such as fibres and may be either pleated or non-pleated. It may be provided with wraps and drainage layers as required. Suitable filter elements are known in the art and so the filter element 12 will not be described in any detail. A perforate core 30, which may be of a plastics material, supports the cylindrical inner surface of the filter element 12. The diameter of the cylindrical inner surface is such that the inlet tube 27 and the outlet tube 29 lie within an imaginary extension of the cylindrical inner surface.

The filter element 12 has an upper annular radially extending surface 41 and a lower annular radially extending surface 42. The knife edge 33 on the head 22 projects into the upper surface 41 and the knife edge 38 on the end cap 13 extends into the lower surface 42. The head 22 thus acts as an upper end cap for the filter element 12. This locates the filter element 22 relative to the head 22 and the end cap 13. The filter element 12 is held in this position by the tie tube 14 which is connected between the head 22 and the end cap 13. The tie tube 14, which is seen in cross section in Figure 2, comprises an outer tube 43 and an inner tube 44. As seen in Figure 2, the inner tube 44 has an axis which is offset from the axis of the outer tube 43 and a portion of the inner tube 44 is formed by a portion of the outer tube 43.

The outer tube 43 has a diameter which is less than the inner diameter of the filter element 12 so that the inner surface of the filter element 12 is spaced radially outwardly of the outer surface of the outer tube 43. The diameter of the outer tube 43 is such that it encompasses the inlet passage 25 but is radially inwardly of the outlet passage 26. The inner tube 44 has a similar diameter to both the inlet passage 25 and the aperture 39 in the end cap 13 and is axially aligned with the inlet passage 25 and the aperture 39 so as to form a continuous closed passage between the inlet passage 25 and the aperture 39.

The tie tube 14 is welded at one end to the inner surface 31 of the head 22 and at the other end to the upper surface 41 of the end cap 13. This thus holds the filter element 12 in position on the head 22. In addition, the core 30 may also be so welded.

In use, the inlet tube 27 is connected, as described above, to an inlet pipe supplying fluid to be filtered. The outlet tube 29 is connected via a connector to a receiver for receiving filtered fluid. As will be seen, the inlet tube 27 has an axial length that is less than the axial length of the outlet tube 29. This allows the inlet tube 27 and the outlet tube 29 to be located close to one another on the head body 24 whilst still allowing sufficient access to attach the connectors.

Fluid is then pumped through the pipe and the inlet tube 27 before passing through the inner tube 44 of the tie tube 14 and the aperture 39 in the end cap 13. The inner tube 44 thus acts as a transfer tube to lead the fluid to the interior of the bowl 23 and allows it to pass through the space between the end cap 13 and the base 34 of the bowl 23 to the exterior surface of the filter element 12. The fluid then passes radially inwardly through the filter element 12, through the perforate core 30 and into the annular space between the core 30 and the outside of the outer tube 43 before leaving through the outlet tube 29 and the outlet pipe. When the filter assembly is non-operational, the part of the bowl 23 remote from the bowl flange 36 is, as seen in the drawing, spaced from the associated surfaces of the container 15. This spacing is sufficient to allow the bowl 23 to be lifted in and out of the container 15 and sufficiently small that if, at operating pressures, the bowl 23 is forced against the container 15, it is supported by the container 15. This action may also be influenced by the temperature of the filtered fluid; where the fluid to be filtered is at a temperature higher than ambient temperatures, this will increase the flexibility of the bowl 23 and cause it to be forced against the container 15 although the bowl remains self supporting when not in use and at room temperatures.

When the filter element 12 needs changing, the connectors for the tubes are disconnected from the inlet tube 27 and the outlet tube 29. The lid 16 is removed from the container 15. The casing 11 can then be removed and disposed of in one piece. It is replaced by a fresh casing 11 with associated filter element 12, end cap 13 and tie tube 14, with the lid 16 being reconnected to the container 15 to close the housing 10. The inlet pipe and the outlet pipe can then be reconnected to the inlet tube 27 and the outlet tube 29 respectively and filtration of the fluid recommenced.

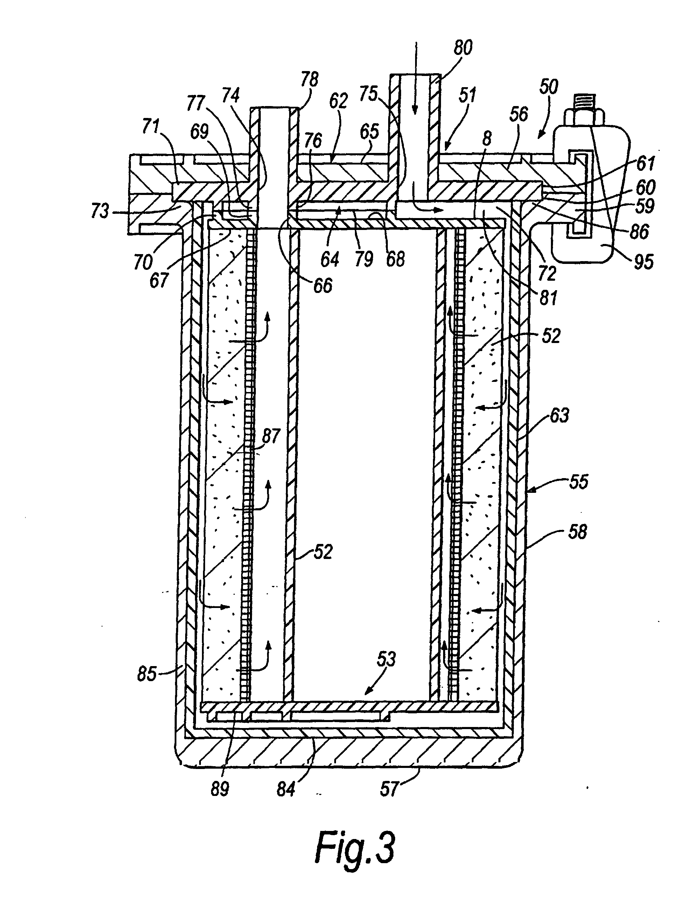

Referring next to Figure 3, the second filter assembly comprises a housing indicated generally at 50, a casing indicated generally at 51, a filter element 52, a lower end cap 53 and a tie tube 54.

The housing 50 is made of metal, for example stainless steel, and comprises a container 55 and a lid 56. The container 55 has a circular base 57 surrounded by an annular side wall 58 which terminates at its upper end in an outwardly directed annular flange 59. The radially inner end of the upper surface of the outwardly directed flange 59 is formed with a step 60 for a purpose to be described below.

The lid 56 is generally circular with a diameter that is generally equal to the diameter of the container 55 across the flange 59. The lid 56 has an outer peripheral surface that mates with the flange 59 and can be connected to the flange 59 by fixing means, such as bolts (not shown) or clamps (one of which is shown schematically at 95). As seen in Figure 3, the lid 56 is provided with a step 61 that is in register with the step 60 in the annular flange 19 to form an annular channel extending around the container 55 between the flange 55 and the lid 56. The purpose of this will be described below.

The casing 51 is formed from suitable plastics materials and comprises a head member 62 and a bowl 53. The head member 62 includes a body formed from any suitable plastics material with a moulded upper end cap 64 joined to a head moulding 65. The end cap 64 is a plate-like disc-shaped part and is provided with a hole 66 offset from the centre and extending between a first (lower) face 67 of the end cap 65 and a second (upper) face 68 of the end cap 64. An inner annular rib 69 surrounds the hole 66 on the second face 68. The second face 68 also carries an outer annular rib 70 having a larger diameter than the inner rib 69, surrounding the inner rib 69 and having its axis offset from the axis of the end cap 64.

The head moulding 65 is also a plate-like disc-shaped part but with a greater diameter than the upper end cap 64. The head moulding 65 has an upper surface 71 and a lower surface 72. An annular rebate 73 extends around the lower surface.72 at the periphery of the head moulding 65 for a purpose to be described below. The head moulding 65 is provided with an outlet hole 74 and an inlet hole 75. An inner annular rib 76 extends around the outlet hole 74 on the lower surface 72 of the head moulding 65 and is connected to the inner rib 69 on the upper end cap 64. The two ribs 69,76 thus form a spacer that separates the upper end cap 64 and the head moulding 65 holding these parts parallel to one another. An outer annular rib 77 is also provided on the lower surface 72 of the head moulding 65. The outer annular rib 77 surrounds the inner annular rib 76 and is sized and located to be in register with and connected to the outer rib 70 on the end cap 64. The two ribs 70,77 thus form a second spacer that separates the upper end cap 64 and the head moulding 65 to provide the body of the head member 67 with a hollow interior. In this way, the hole 66 in the end cap 64, the inner rib 69 on the end cap 64, the inner rib 76 on the head moulding 65 and the outlet hole 74 on the head moulding 64 form a continuous passage 99 through the head 62. This passage is continued by an outlet tube 78 connected to and projecting upwardly from the upper surface 71 of the head moulding 65. In addition, the outer rib 70 on the upper end cap 64 and the outer rib 77 on the head moulding 65 together form a closed chamber 79 surrounding the inner ribs 69,76. This reduces dead space.

As seen in Figure 3, the outer rib 77 passes adjacent to the inlet hole 75. An inlet tube 80 is in register with this inlet hole 75 and is carried on the upper surface 72 of the head moulding 65. Accordingly, the axis of the outlet and inlet tubes 78,80 are parallel but spaced, and parallel to the axes of the end cap 64 and the head moulding 65. A circumferentially and radially extending passage 81 is thus formed between the end cap 64 and the head moulding 65 and leading from the inlet hole 75 to the periphery of the end cap 64 and extending generally normal to the axis of the inlet tube 80.

The outlet and inlet tubes 78,80 may be shaped in a manner not shown to allow the attachment of connectors (not shown) at the end of respective inlets and outlet pipes to form fluid-tight couplings between such pipes and the tubes 78,80.

The bowl 63 is moulded from a plastics material. This may be translucent. The bowl 63 is of similar shape to the container 55 with a circular base 84 surrounded by an upstanding annular side wall 85 terminating at its upper end in an outwardly directed annular flange 86. The diameter of the bowl base 84 and the bowl side wall 85 are of lesser diameter than the diameter of the casing container base 57 and the container side wall 58. The bowl 53 is self supporting which is to say that the bowl will maintain its shape when standing on a surface at room temperatures and when not in use. In order to achieve this, the thickness of the bowl 53 may be generally greater than 0.50mm.

As seen in Figure 3, the diameter of the head moulding 64 is such that an outer peripheral portion of the head moulding 64 extends beyond the peripheral edge of the upper end cap 64. The annular flange 86 of the bowl 63 is welded to the lower surface 72 of this peripheral portion of the head moulding 65 with the flange 82 sitting in the rebate 73. This thus forms a closed casing with access only through the inlet tube 78 and the outlet tube 80. As seen in Figure 3, the welded peripheral edge of the head moulding 65 and the bowl annular flange 86 are received within the channel formed between the steps 60,61 in the housing 50. This locates and supports the casing 51 in the housing 50.

The lower end cap 53 is moulded from a suitable plastics material. It is substantially the same (in this case identical in shape) to the upper end cap 64, to reduce the number of parts, except that it does not include the hole 66. Accordingly, parts common to the lower end cap 53 and the upper end cap 64 are given the same reference numerals and are not described in detail. As seen in Figure 3, the first surface 67 of the end cap 53 is the upper face and the second surface 68 is the lower face.

The filter element 52 is generally cylindrical. It may be formed from any suitable material such as fibres and may be either pleated or non-pleated. It may be provided with wraps and drainage layers as required. Suitable filter elements are known in the art and so the filter element 52 will not be described in any detail. A perforate core 87, which may be of plastics material, supports the inner cylindrical surface of the filter element 52.

The filter element 52 is formed with an upper annular radially extending surface portion 88 connected to the upper end cap 64 and a lower annular radially extending surface portion 89 connected to the lower end cap 53. As seen in Figure 3, the peripheral edge of the upper end cap 64 is in register with the exterior surface of the filter element 52 . As also seen in Figure 3, the internal diameter of the filter element 52 is such that the outlet and inlet tubes 78,80 lie within an imaginary extension of the interior surface of the filter element 52. Thus, the core 87 is located radially outwardly of the radially outer edge of the hole 66 in the end cap 64. Thus the outlet tube 78 communicates with the interior of the filter element 52.

The tie tube 54 is a cylindrical tube of plastics material extending through the centre of the filter element 12 and connected to the upper end cap 64 and the lower end cap 53. As seen in Figure 3, the diameter and position of the tie-tube 54 are such that the tie tube does not overlap the hole 66 in the end cap 64. Thus the tie tube 54 and the upper and lower end cap 64,53 form between them a closed chamber surrounded by an annular volume formed between the exterior surface of the tie tube 54 and the core 87 of the filter element 52. The tie tube 54 may be welded to the upper and lower end caps 64,53.

As seen in Figure 3, the outer surface of the filter element 52 is spaced from the inner surface of the bowl 63. The lower end cap 53 is also spaced from the base 64 of the bowl 63, although this need not be the case; there may be no dead volume between the lower end cap 53 and the base 84.

In use, the inlet tube 80 is connected to an inlet pipe supplying fluid to be filtered. The outlet tube 78 is connected via a connector to a receiver for receiving filtered fluid. As will be seen, the inlet tube 80 has an axial length that is greater than the axial length of the outlet tube 78. This allows the inlet tube 80 and the outlet tube 78 to be located close to one another on the head 62 while still allowing sufficient access to attach the connectors. Fluid is then pumped through the pipes and the inlet tube 80 before passing through the second hole 75 and spreading radially outwardly and circumferentially to the edge of the upper end cap 64. The fluid then passes between the exterior surface of the filter element 52 and the interior surface of the bowl 64 before passing through the filter element 52 and the core 87 to the annular volume between the core 87 and the tie tube 54. From there, the filtered fluid exits via the hole 66, the hole 75 and the outlet tube 78. The head member 62 thus provides not only an end cap 64 for the filter element 52 but also a passage leading from the centre of the filter element to the exterior surface of the filter element.

The spacing between the bowl 63 and the container 55 is sufficient to allow the bowl 63 to be lifted in and out of the container 65 but is sufficiently small that if, at operating pressures, the bowl 63 is forced against the container 55, it is supported by the container 55. This action may also be influenced by the temperature of the filtered fluid; where the fluid to be filtered is at a temperature higher than ambient temperatures, this will increase the flexibility of the bowl 63 and cause it to be forced against the container 65 although the bowl 63 remains self-supporting when not in use and at room temperatures. When the filter element 52 needs changing, the connectors for the tubes are disconnected from the inlet tube 78 and the outlet tube 80. The clamp 95 is removed to allow the lid 56 to be lifted from the container 55. The casing 11 can then be removed as a unit and disposed of in one piece. It is replaced by a fresh casing 61 with associated filter element 52, an end cap 53 and a tie tube 54, with the lid 56 being reconnected to the container 65 to close the housing 50. The inlet pipe and the outlet pipe can then be reconnected to the inlet tube 80 and the outlet tube 78 respectively and filtration of the fluid recommenced.

It will be appreciated that the filter assemblies described above with reference to the drawings has a number of advantages. Since the bowl 23,53 is self-supporting, it can be manufactured accurately to fit inside the housing 10,50 without the possibility of snagging or folding. In addition, the spacing between the bowl 23,53 and the container 15,55 can be accurately gauged to give a required level of support in operation.

The provision of a head 22,52 with integral means for receiving connectors (the grooves 32 in Figure 1) obviates the need for a plenum chamber and so cuts down the number of parts. In addition, the provision of inlet and outlet tubes 27,29,80,78 that extend through the housing minimizes spillage when changing filter elements since no fluid is left in the housing. The filter assembly uses a single filter element 12,52 of large diameter which allows the annular gap between the filter element 12,52 and the bowl 23,53 to be kept to a minimum. This keeps the upstream volume of fluid to a minimum which is advantageous when the casing 11,51 is being removed. In addition, the large diameter of the filter element 12,52 allows the inlet passage 25,80 and the outlet passage 26,79 to be located within the inner diameter of the filter element 12,52. The presence of the tie tube 14,54 is also advantageous. This performs multiple functions in connecting the end cap 13,53 to the head 22,52 as well as providing support for the filter element 12,52. It will be appreciated that, in Figure 1, the presence of the inner tube 44 within the outer tube 43 and, in Figure 3, the presence of the tie tube 54 itself, reduces the volume which can be occupied by fluid within the core downstream of the filter element 12,52. This again reduces the volume of fluid taken when the casing 11,51 is removed and disposed of.

The tie tubes 14,54 need not be of circular cross-section. They could be of any cross-sectional shape. The tie tubes 14,54 are not the only means that may be used to reduce the volume of the centre of the filter element 12. A solid member may be used. In addition, such a member need not be used with the filter assemblies described above with reference to the drawings. It could be used with any filter assembly comprising a housing containing a filter element and having an inlet for fluid to be filtered and an outlet for filtered fluid, the filter element having an open centre through which fluid flows in a path between the inlet and the outlet. In this case, the member need not extend the whole length of the centre, it could extend along only part of the length.

It will be appreciated that there are a number of variations that may be made to the filter assembly described above with reference to the drawings. Although there are advantages to having a single filter element 12,52, there may be a plurality of filter elements. The container 15,55 and the bowl 23,53 are, as shown, circular, but they need not be circular; they could be of any suitable shape. The tie tube 14,54 is a preferred construction, but other arrangements may be used, particularly in Figure 1, for feeding fluid to the filter element 12,52 and for removing filtered fluid from the filter element 12. In particular, the inlet and the outlet need not be in the head 22,62; they could be elsewhere in the casing, or one might be in the head 22,62 and the other in the bowl 23,53. The bowl 11,51 is described as self-supporting due to the thickness of the material of which it is made. It could be self supporting as the result of separately or integrally formed reinforcements or ribs or battens with thinner material between.

Although the filter element 12,52 is described above in Figure 1 as having knife edges 33,38 projecting into the upper and lower surfaces 41,42, the knife edges may be omitted and the filter element 12 welded, bonded, glued or otherwise attached to the head 22 and the end cap 13. This is as shown and described in Figure 3. The filter element 12,52 is described above as being cylindrical. It could be of any tubular shape, whether of circular internal and external cross-section or not. In this case, the inlet and outlet tubes 27,29,78,80 will lie within an imaginary extension of the interior surface of the filter element at the end of the filter element 12,52 adjacent the tubes.

The direction of flow may be reversed.

The second filter assembly of Figure 3 need not be as illustrated and described above. The head member 62 may be configured other than as shown to provide a passage from the inlet tube 80 to the periphery of the filter element 52. The use of a spaced upper end cap 64 and head member 65 allows a reduction in the number of different parts manufactured (since the upper end cap 84 is substantially the same as the lower end cap 53) but this construction is optional.

In addition, the head member 62 may be used to provide inlet and outlet flow paths for filter assemblies other than those described in Figures 1 to 3 above. It could be used in a filter assembly comprising a housing containing any appropriate tubular filter element with a hollow centre, an interior surface and an exterior surface. In this case, the head member 62 provides an end cap for the filter element and also provides a first passage leading to the centre of the filter and a second passage leading to the exterior surface of the filter element.

The head member 62/end cap 53 combination may also be used to end cap filter elements other than those described above. In such a case, the filter element includes a tubular filter member having a first end and a second end. The first end is closed by a head member which provides a first passage and a second passage. The second end is closed by an end cap. The head member includes a part which is substantially the same as the end cap and has a hole leading to the first passage.

## Claims

1. A filter assembly comprising a filter element (12,52) having a first end and a second end, a casing (11,51) surrounding the element, the casing (11,51) being formed by a head member (22,62) providing an inlet (27,80) and an outlet (29,78) and a self supporting bowl (23,63) connected to the head member (22,62) and receiving the filter element (11,52), and a housing (10,50) containing the casing (11,51) **characterized in that** the first end of the filter element (12,52) is mounted on said head member (22,62), with the inlet (27,80) and the outlet (29,78) on the head member (22,62) extending through the housing (10,50) for connection to a supply of fluid to be filtered and a receiver for receiving filtered fluid respectively.

2. An assembly according to claim 1 wherein the bowl (23,63) is formed from a plastics material.

3. An assembly according to claim 2 wherein the bowl (23,63) is formed by moulding from a plastics material.

4. An assembly according to any one of claims 1 to 3 wherein the bowl (23,63) has a thickness generally greater than 0.50mm.

5. An assembly according to any one of claims 1 to 4 wherein the head member (22,62) includes an inlet passage (27,80) forming said inlet and an outlet passage (29,78) forming said outlet, each passage (27,29,80,78) having a first end and a second end, the first end terminating within the casing (11,51) and the second end terminating outside the housing (10,50) in a connection for attachment to a pipe.

6. An assembly according to claim 5 wherein the head member (22) is moulded in one piece from a plastics material.

7. An assembly according to any one of claims 1 to 6 wherein the head member (22,62) has a generally disc-shaped body (24,64) with two tubes (27,29;78,82) projecting upwardly from said body (24,64) and extending through said housing (10,50), one tube (27,80) forming said inlet and the other tube (29,78) forming said outlet.

8. An assembly according to claim 7 wherein one tube (29,78) has a greater axial length above the body than the other tube (27,80).

9. An assembly according to any one of claims 1 to 8 wherein the head member (22,62) and the bowl (23,63) are made of plastics materials, the head member (22,62) and the bowl (23,63) being welded together to form said casing (11,51).

10. An assembly according to any one of claims 1 to 9 wherein the filter element (12,52) is generally cylindrical with a first end and a second end, the first end being mounted on the head member (22,62) and the second end mounting an end cap (13,53) that closes the second end.

11. An assembly according to claim 10 wherein the bowl (23,63) is of circular cross-section.

12. An assembly according to claim 10 or claim 11 wherein the inlet (27,80) communicates with an exterior surface of the filter element (12,52) and the outlet (29,78) communicates with an interior surface of the filter element (12,52).

13. An assembly according to claim 12 wherein a transfer tube (44) leads from the inlet (27) through the filter element (12) to an outlet (39) in the end cap (13) for the passage of fluid to be filtered to the exterior surface of the filter element (12).

14. An assembly according to claim 12 or claim 13 wherein an outer tube (43) extends between the head member (22) and the end cap (13), the outer tube (43) having an exterior surface spaced radially inwardly of the interior surface of the filter element (12) to form an annular space there between, the outlet (29) communicating with said annular space.

15. An assembly according to claim 14 when dependent on claim 13 wherein the transfer tube (44) and the outer tube (43) are formed integrally, with the transfer tube (44) inside the outer tube (43).

16. An assembly according to claim 15 wherein the transfer tube (44) and the outer tube (43) are of respective circular cross-sections with parallel axes.

17. An assembly according to claim 15 or claim 16 wherein the transfer tube (44) and the outer tube (43) are co-extruded from a plastics material.

18. An assembly according to claim 17 when dependent on claim 9 wherein the transfer tube (44) and the outer tube (43) are welded at one end to the head member (22) and at an end opposite said one end to the end cap (13).

19. An assembly according to claim 12 wherein the head member (62) includes a radially extending passage leading from the inlet (80) to the exterior surface of the filter element (52).

20. An assembly according to claim 19 wherein the head member (62) is formed from an annular end cap (64) spaced from a head moulding (65) by at least one rib (69,70) to form a space therebetween, said space forming said passage with the inlet communicating with said space.

21. An assembly according to claim 20 wherein the outlet includes a hole (66) in the end cap (64) and a hole (74) in the head moulding (65), each hole being surrounded by a respective rib (69,76) with the two ribs (69,76) being in register and being interconnected to form a portion of the outlet between the holes (66,74).

22. An assembly according to claim 21 wherein the end cap(64) and the head moulding (65) each includes a respective additional annular rib (70,77), each additional rib (70,77) surrounding the associated rib (69,76) and the two additional ribs (70,77) being connected together to interconnect and space the end cap (64)and the head moulding (65) and form a closed annular chamber (79).

23. An assembly according to any one of claims 1 to 22 wherein the housing (10,50) comprises a container (15,55) which receives the bowl (23,63) and a removable lid (16,56) that closes the container (15,55), the lid (16,56) having passages therethrough for the inlet (27,80) and the outlet (29,78).

24. An assembly according to claim 19 wherein the housing (10,50) is of metal.

25. An assembly according to claim 23 or claim 24 and in which the bowl (23,63) is made of a plastics material, the bowl (23,63) and the container (15,55) being spaced prior to use such that expansion of the bowl (23,63) on the passage of fluid therethrough causes the bowl to bear against the container (15,55) so that the container (15,55) supports the bowl (23,63).

26. A filter assembly according to any one of claims 1 to 25 wherein the filter element (12,52) has an open centre through which fluid flows in the path thereof between the inlet (27,80) and the outlet (29,78), the centre containing a member (14,54) that reduces the volume of the centre.

27. An assembly according to claim 26 wherein the filter element (12,52) includes a filter medium of tubular shape, the centre being defined by the centre of the tubular shape, the member (14,54) extending along said centre.

28. An assembly according to claim 27 wherein the filter medium (12,52) has an outer surface and an inner surface, the member (14,54) being spaced from the inner surface along the length thereof.

29. An assembly according to claim 27 or claim 28 wherein the filter medium (12,52) has a first end and a second end, the first and second ends being connected to respective first and second end caps (13,22,53,64), the member (14,54) extending between the first end cap (13,53) and the second end cap (53,64).

30. An assembly according to claim 29 wherein the member (14,54) is connected to the first and second end caps (13,22,53,64).

31. An assembly according to claim 29 or claim 30 wherein one end cap (22,64) includes an aperture (29,66) for the flow of fluid therethrough, said aperture (29,66) being in fluid communication with the reduced centre volume formed between the member (14,54) and the filter medium (12,52).

32. An assembly according to any one of claims 29 to 31 wherein the member comprises a tube (14,54) extending between the first and second end caps (13,22,53,64) and spaced from the filter medium (12,52).

33. An assembly according to any one of claims 26 to 32 wherein the member (14) provides a passage (44) to pass fluid along the length of the filter element (12).

34. An assembly according to claim 33 when dependent on claim 29 wherein the member (14) provides a passage (44) to pass fluid from one end cap (22) to the other end cap (13).

35. An assembly according to claim 34 wherein the first end cap (22) includes an aperture (27) and the second end cap (13) includes an aperture (39), the passage (44) extending between the apertures (27,39) to pass fluid from one end cap (22) to the other end cap (13) through the filter element. (12).

36. An assembly according to claim 33 or claim 34 wherein said passage is formed by a tube (44) extending between the first and second end caps (22,13).

37. An assembly according to claim 36 wherein the member (14) is formed by a tube (43,44), said tube also providing said passage.

38. An assembly according to claim 36 wherein the member (14) is formed by a tube (43) having an interior, the interior being sub-divided to form said passage (44).

39. An assembly according to any one of claims 26 to 38 wherein the housing (10,50) comprises a container (15,55) and a lid (16,56), the filter element (15,52) being received in the container (15,55) and the inlet and outlet (27,80,29,78) passing through the lid (16,56).

40. An assembly according to claim 39 wherein the filter element (12,52) is connected to a head member (22,62) at an end of the filter element (12,52) adjacent said lid (16,56), a self supporting bowl (23,63) being connected to the head member (22,62) and receiving the filter element (12,52), the housing (10,50) containing the head member (22,62) and the bowl (23,63).

41. An assembly according to any one of claims 26 to 40 wherein the filter element (12,52) has a first end and a second end, the first end being closed by a head member (22,62) providing an inlet and an outlet (27,80,29,78).

42. A filter assembly according to any one of claims 1 to 41 wherein a filter element (52) is tubular with a hollow centre, an interior surface and an exterior surface, a head member (62) providing an end cap for an end of the filter element (52) and also providing a first passage (78) leading to the centre of the filter element (52) and a second passage (99) leading to the exterior surface of the filter element (52).

43. An assembly according to claim 42 wherein the second passage (99) includes a first portion (80) extending in a direction lying within an imaginary extension of the interior surface of the filter element (52) at said end and a second portion extending generally normal to said first portion.

44. An assembly according to claim 43 wherein the head member (62) includes a body with a hollow interior, the first portion of the second passage (99) being formed by a tube (80) extending from said body, and the second portion being formed within said body.

45. An assembly according to claim 44 wherein the body of the head member (62) includes a first plate-like member (64) and a second plate-like member (65), the first and second members (64,65) being spaced to form said hollow interior.

46. An assembly according to claim 45 wherein the first member (64) is connected to an associated end of the filter element (52).

47. An assembly according to claim 46 wherein the first member (64) includes an aperture (66) for communicating the centre of the filter element (52) with the first passage (78).

48. An assembly according to any one of claims 42 to 47 wherein the first passage is formed by a tube (78) lying within an imaginary extension of the interior surface of the filter element (52) at said end.

49. An assembly according to claim 48 when dependent on claim 47 wherein the body includes a continuation of said tube (78) terminating at said aperture (66).

50. An assembly according to any one of claims 45, 46 and 49 or to claim 48 when dependent on claim 45 wherein the first member (64) and the second member (65) lie in respective parallel planes, a spacer member (69,76) separating the first and second members (64,65) and forming the second portion of the first passage.

51. An assembly according to claim 50 wherein the first member (64) has an outer peripheral edge in register with the exterior surface of the filter element (52) at said end.

52. An assembly according to claim 51 wherein the second member (65) has an outer peripheral portion that extends beyond the outer peripheral edge of the first member (64).

53. An assembly according to any one of claims 42 to 52 and including a bowl (63) connected to the head member (62) and receiving the filter element (52), the housing (50) containing the bowl (63).

54. An assembly according to claim 53 when dependent on claim 52 wherein the bowl (63) is connected to the peripheral portion of the second member (65) of the head member (62) that extends beyond the peripheral edge of the first member (64).

55. An assembly according to claim 53 or claim 54 wherein the bowl (63) is self-supporting.

56. An assembly according to claim 54 or claim 55 wherein the housing (50) includes a removable lid (56) covering the head member (62).

57. An assembly according to any one of claims 42 to 56 wherein the head member (62) is formed from a plastics material.

58. An assembly according to any one of claims 42 to 57 wherein the filter element (52) is cylindrical with a hollow cylindrical centre and cylindrical inner and outer surfaces.

59. An assembly according to any one of claims 42 to 58 wherein the filter element (52) has a first end capped by the head member (62) and a second end capped by an end cap (53).

60. A filter element according to any one of claims 1 to 25, 41, or 42 to 59 wherein the head member (62) includes a first end cap part (64) which is substantially the same as said second end cap (53) and has a hole (66) leading to the first passage (78).

61. A filter element according to claim 60 wherein the first end cap (64) is connected to a first end of the filter member (52) to provide an end cap for said first end.

62. A filter element according to claim 60 or claim 61 wherein the first end cap (64) and the second end cap (53) each comprise a plate-like member having first and second spaced surfaces (67,68), each first surface (67) abutting an associated end of the filter element (52).

63. A filter element according to claim 62 wherein the head member (52) includes a body formed by said first end cap (64) and a second member (65) spaced from said first end cap (64).

64. A filter element according to claim 63 wherein the first end cap (64) and the second member (65) are spaced by at least one spacer.

65. A filter element according to claim 64 wherein said at least one spacer is formed integrally with the first end cap (64) and the second member (65).

66. A filter element according to claim 65 wherein said at least one spacer is formed on the second surface (68) of the first end cap (64), the second member (65) having first and second spaced surfaces (71,72) and the at least one spacer being formed on the second surface (72) of the second member (65).

67. A filter element according to any one of claims 64 to 66 wherein the at least one spacer is formed by a rib (69) projecting from the second surface (68) of the first end cap (64) and a rib (76) on the second surface (72) of the second member (65) the ribs (69,76) being in register to form said spacer.

68. A filter element according to claim 67 when dependent on claim 66, wherein said rib (69) surrounds the hole (66) in the first end cap (64) and also surrounds a corresponding hole (74) in the second member (65) so forming a flow path through the head member from and communicating with the first passage (78).

69. A filter element according to claim 68 wherein a second rib (70,77) is provided on each second surface (68,72), the second ribs (70,77) being continuous and surrounding the first-mentioned ribs (69,76), the second ribs (70,77) being connected to one another to form a closed chamber.

70. A filter element according to claim 69 wherein the second passage communicates with a space between the first end cap (64) and the second member (65), said space being outside said closed chamber.

71. A filter element according to any one of claims 60 to 70 wherein the first end cap (65) and the second end cap (53) are substantially disc-shaped.

72. A filter element according to claim 71 when dependent on claim 63 wherein the second member (65) is dise shaped.

73. A filter element according to claim 72 wherein the second member (65) has a greater diameter than the first end cap (64) so that a peripheral portion of the second member (65) projects beyond a peripheral edge of the first end cap (64).

74. A filter element according to any one of claims 60 to 73 including a bowl (53) connected to the head member (62) and receiving the filter element (52).

75. A filter element according to claim 74 when dependent on claim 73 wherein the bowl (53) is connected to the peripheral portion of the second member (65) that extends beyond the peripheral edge of the first end cap (64).

## Patentansprüche

1. Filteranordnung umfassend ein Filterelement (12, 52) mit einem ersten Ende und einem zweiten Ende, einer Kapsel (11, 51), welche das Element umgibt, wobei die Kapsel (11, 51) aus einem Kopfteil (22, 62), welches einen Einlass (27, 80) und einen Auslass (29, 78) schafft, und einen selbsttragenden Schalenteil (23, 63) gebildet wird, welch letzteres mit dem Kopfteil (22, 62) verbunden ist und welches das Filterelement (12, 52) aufnimmt, und ein Gehäuse (10, 50), welche die Kapsel (11, 51) enthält, **dadurch gekennzeichnet, dass** das erste Ende des Filterelementes (12, 52) an dem Kopfteil (22, 62) gehalten ist, wobei der Einlass (27, 80) und der Auslass (29, 78) an dem Kopfteil (22, 62) sich durch das Gehäuse (10, 50) zur Verbindung mit einem Vorrat an zu filterndem Fluid und einer Aufnahme zum Aufnehmen gefilterten Fluids hindurch erstrecken.

2. Anordnung nach Anspruch 1, worin das Schalenteil (23, 63) aus einem Kunststoffmaterial gebildet ist.

3. Anordnung nach Anspruch 2, worin das Schalenteil (23, 63) in einem Formverfahren aus dem Kunststoffmaterial gebildet ist.

4. Anordnung nach einem der Ansprüche 1 bis 3, worin das Schalenteil (23, 63) eine Dicke aufweist, die im Wesentlichen größer als 0,50 mm ist.

5. Anordnung nach einem der Ansprüche 1 bis 4, worin das Kopfteil (22, 62) einen Einlassdurchgang (27, 80) aufweist, der den Einlass bildet, und einen Auslassdurchgang (29, 78) aufweist, der den Auslass bildet, wobei jeder Durchgang (27, 29, 80, 78) ein erstes Ende und ein zweites Ende aufweist, wobei das erste Ende innerhalb der Kapsel (11, 51) endet und das zweite Ende an der Außenseite des Gehäuses (10, 50) in einer Verbindung zur Befestigung einer Leitung endet.

6. Anordnung nach Anspruch 5, worin das Kopfteil (22) als ein einziges Stück aus einem Kunststoffmaterial geformt ist.

7. Anordnung nach einem der Ansprüche 1 bis 6, worin das Kopfteil (22, 62) im Wesentlichen einen scheibenförmigen Körper (24, 64) mit zwei Leitungen (27, 29; 78, 82) aufweist, welche von dem Körper (24, 64) abstehen und sich durch das Gehäuse (10, 50) erstrecken, wobei eine Leitung (27, 80) den Einlass und die andere Leitung (29, 78) den Auslass bildet.

8. Anordnung nach Anspruch 7, worin eine Leitung (29, 78) eine größere axiale Länge oberhalb des Körpers aufweist als die andere Leitung (27, 80).

9. Anordnung nach einem der Ansprüche 1 bis 8, worin das Kopfteif (22, 62) und das Schalenteil (23, 63) aus einem Kunststoffmaterial hergestellt sind, wobei das Kopfteil (22, 62) und das Schalenteil (23, 63) miteinander verschweißt sind, um die Kapsel (11, 51) zu bilden.

10. Anordnung nach einem der Ansprüche 1 bis 9, worin das Filterelement (12, 52) im Wesentlichen zylindrisch ist, mit einem ersten Ende und einem zweiten Ende, wobei das erste Ende an dem Kopfteil (22, 62) gehalten ist und das zweite Ende mit einer Endkappe (13, 53) versehen ist, welche das zweite Ende verschließt.

11. Anordnung nach Anspruch 10, worin das Schalenteil (23, 63) einen kreisförmigen Querschnitt aufweist.

12. Anordnung nach Anspruch 10 oder 11, worin der Einlass (27, 80) mit einer äußeren Oberfläche des Filterelementes (12, 52) in Verbindung steht und wobei der Auslass (29, 78) mit einer inneren Oberfläche des Filterelementes (12, 52) in Verbindung steht.

13. Anordnung nach Anspruch 12, worin eine Übertragungsleitung (44) von dem Einlass (27) durch das Filterelement (12) zu einem Auslass (39) in der Endkappe (13) führt, um zu filterndes Fluid zur äußeren Oberfläche des Filterelementes (12) durchzulassen.

14. Anordnung nach Anspruch 12 oder 13, worin die äußere Leitung (43) sich zwischen dem Kopfteil (22) und der Endkappe (13) erstreckt, wobei die äu-Bere Leitung (43) eine äußere Oberfläche aufweist, welche radial nach innen gesehen von der Innenoberfläche des Filterelementes (12) beabstandet ist, so dass ein ringförmiger Raum dazwischen gebildet wird, wobei der Auslass (29) mit diesem Ringraum in Verbindung steht.

15. Anordnung nach Anspruch 14, soweit auf Anspruch 13 rückbezogen, worin die Übertragungsleitung (44) und die äußere Leitung (43) einstückig ausgebildet sind, wobei die Übertragungsleitung (44) Innerhalb der äußeren Leitung (43) angeordnet ist.

16. Anordnung nach Anspruch 15, worin die Übertragungsleitung (44) und die äußere Leitung (43) jeweils kreisförmige Querschnitte mit parallelen Achsen aufweisen.

17. Anordnung nach Anspruch 15 oder 16, worin die Übertragungsleitung (44) und die äußere Leitung (43) aus einem Kunststoffmaterial koextrudiert sind.

18. Anordnung nach Anspruch 17, soweit auf Anspruch 9 rückbezogen, worin die Übertragungsleitung (44) und die äußere Leitung (43) an einem Ende mit dem Kopfteil (22) und am diesem einen Ende entgegengesetzten Ende mit der Endkappe (13) verschweißt sind.

19. Anordnung nach Anspruch 12, worin das Kopfteil (62) einen sich radial erstreckenden Durchgang aufweist, welcher von dem Einlass (80) zu der äußeren Oberfläche des Filterelementes (52) führt.

20. Anordnung nach Anspruch 19, worin das Kopfteil (62) aus einer ringförmigen Endkappe (64) gebildet ist, welche von einem Kopfformling (65) beabstandet ist durch mindestens eine Rippe (69, 70), so dass ein Raum hier zwischen geschaffen ist, wobei der Raum den Durchlass bildet, wobei der Einlass mit diesem Raum in Verbindung steht.

21. Anordnung nach Anspruch 20, worin der Auslass ein Loch (66) In der Endkappe (64) und ein Loch (74) in dem Kopfformling (65) aufweist, wobei jedes Loch von einer zugehörigen Rippe (69, 76) umgeben ist, wobei die beiden Rippen (69, 76) zueinander ausgerichtet sind und miteinander verbunden sind, um einen Teil des Auslasses zwischen den Löchern (66, 74) zu bilden.

22. Anordnung nach Anspruch 21, worin die Endkappe (64) und der Kopfformling (65) jeweils eine entsprechende zusatzliche ringförmige Rippe (70, 77) aufweisen, wobei jede zusätzliche Rippe (70, 77) die zugehörigen Rippen (69, 76) umgeben und wobei die zwei zusätzlichen Rippen (70, 77) miteinander verbunden sind, um die Endkappe (64) und den Kopfformling (65) miteinander zu verbinden und auf Abstand zu halten und um eine geschlossene ringförmige Kammer (79) zu bilden.

23. Anordnung nach einem der Ansprüche 1 bis 22, worin das Gehäuse (10, 50) einen Behälter (15, 55), welcher das Schalenteil (23, 63) aufnimmt und einen entfernbaren Deckel (16, 56) umfasst, welcher den Behälter (15, 55) verschließt, wobei der Deckel (16, 56) Durchlässe hierdurch für den Einlass (27, 80) und den Auslass (29, 78) aufweist.

24. Anordnung nach Anspruch 19, worin das Gehäuse (10, 50) aus Metall ist.

25. Anordnung nach Anspruch 23 oder 24, In welcher das Schalenteil (23, 63) aus einem Kunststoffmaterial hergestellt ist, wobei das Schalenteil (23, 63) und der Behälter (15, 55) vor dem Gebrauch beabstandet sind, so dass eine Ausdehnung des Schalenteils (23, 63) beim Durchgang von Fluid hierdurch bewirkt, dass das Schalenteil gegen den Behälter (15, 55) anliegt, so dass der Behälter (15, 55) das Schalenteil (23, 63) stützt.

26. Filteranordnung nach einem der Ansprüche 1 bis 25, worin das Filterelement (12, 52) eine offene Mitte aufweist, durch welche Fluid auf diesem Pfad zwischen dem Einlass (27, 80) und dem Auslass (29, 78) hindurchfließt, wobei die Mitte ein Element (14, 54) aufweist, welches das Volumen der Mitte vermindert.

27. Anordnung nach Anspruch 26, worin das Filterelement (12, 52) ein rohrförmiges Filtermedium aufweist, wobei die Mitte durch die Mitte der rohrförmigen Struktur definiert ist und das Element (14, 54) sich entlang dieser Mitte erstreckt.

28. Anordnung nach Anspruch 27, worin das Filtermedium (12, 52) eine äußere Oberfläche und eine innere Oberfläche aufweist, wobei das Element (14, 54) von der inneren Oberfläche entlang der Länge hiervon beabstandet ist.

29. Anordnung nach Anspruch 27 oder 28, worin das Filtermedium (12, 52) ein erstes Ende und ein zweites Ende aufweist, wobei die ersten und zweiten Enden mit den jeweiligen ersten bzw. zweiten Endkappen (13, 22, 53, 64) verbunden sind, wobei das Element (14, 54) sich zwischen der ersten Endkappe (13, 53) und der zweiten Endkappe (53, 64) erstreckt.

30. Anordnung nach Anspruch 29, worin das Element (14, 54) zwischen den ersten und zweiten Endkappen verbunden ist (13, 22, 53, 64).

31. Anordnung nach Anspruch 29 oder 30, worin eine Endkappe (22, 64) eine Öffnung (29, 66) aufweist, damit Fluid hier durch fließen kann, wobei die Öffnung (29, 66) in Fluidverbindung mit der Mitte mit reduziertem Volumen steht, welche zwischen dem Element (14, 54) und dem Filtermedium (12, 52) gebildet ist.

32. Anordnung nach einem der Ansprüche 29 bis 31, worin das Element eine Leitung (14, 54) umfasst, welche sich zwischen der ersten und der zweiten Endkappe (13, 22, 53, 64) erstreckt und von dem Filtermedium (12, 52) beabstandet ist.

33. Anordnung nach einem der Ansprüche 26 bis 32, worin das Element (14) einen Durchlass (44) aufweist, so dass Fluid entlang der Länge des Filterelementes (12) durchtreten kann.

34. Anordnung nach Anspruch 30, soweit abhängig von Anspruch 29, worin das Element (14) einen Durchlass (44) schafft, um Fluid von einer Endkappe (22) zu der anderen Endkappe (13) durchzulassen.

35. Anordnung nach Anspruch 34, worin die erste Endkappe (22) eine Öffnung (27) aufweist und die zweite Endkappe (13) eine Öffnung (39) aufweist, wobei der Durchlass (44) sich zwischen den Öffnungen (27, 39) erstreckt, um Fluid von einer Endkappe (22) zur anderen Endkappe (13) durch das Filterelement (12) durchzulassen.

36. Anordnung nach Anspruch 33 oder 34, worin der Durchlass durch eine Leitung (44) gebildet wird, welche sich zwischen den ersten und zweiten Endkappen (22, 13) erstreckt.

37. Anordnung nach Anspruch 36, worin das Element (14) aus einer Leitung (43, 44) gebildet ist und worin die Leitung ebenfalls den Durchlass schafft.

38. Anordnung nach Anspruch 36, worin das Element (14) aus einer Leitung (43) gebildet wird, welche ein Inneres aufweist, welches unterteilt ist, um den Durchlass (44) zu bilden.

39. Anordnung nach einem der Ansprüche 26 bis 38, worin das Gehäuse (10, 50) einen Behälter (15, 55) und einen Deckel (16, 56) umfasst, wobei das Filterelement (15, 52) in dem Behälter (15, 55) aufgenommen wird und der Einlass und der Auslass (27, 80, 29, 78) durch den Deckel (16, 56) hindurchtreten.

40. Anordnung nach Anspruch 39, worin das Filterelement (12, 52) mit dem Kopfteil (22, 62) an einem Ende des Filterelementes verbunden ist, benachbart zu dem Deckel (16, 56), worin ein setbsttragendes Schalenelement (23, 63) mit dem Kopfteil (22, 62) verbunden ist und das Filterelement (12, 52) aufnimmt, wobei das Gehäuse (10, 50) das Kopfteil (22, 62) und das Schalenteil (23, 63) beinhaltet.

41. Anordnung nach einem der Ansprüche 26 bis 40, worin das Filterelement (12, 52) ein erstes Ende und ein zweites Ende aufweist, wobei das erste Ende mittels eines Kopfteils (22, 62) geschlossen ist und einen Einlass und einen Auslass (27, 80, 29, 78) schafft.

42. Filteranordnung nach einem der Ansprüche 1 bis 41, worin ein Filterelement (52) rohrförmig mit einer hohlen Mitte, einer Inneren Oberfläche und einer äußeren Oberfläche ausgebildet ist, worin ein Kopfteil (62) eine Endkappe für ein Ende des Filterelementes (52) schafft und ebenfalls einen ersten Durchlass (78) bietet, welcher zu der Mitte des Filterelementes (52) führt, und einen zweiten Durchlass (99) bietet, welcher zu der äußeren Oberfläche des Filterelementes (52) führt.

43. Anordnung nach Anspruch 42, worin der zweite Durchlass (99) einen ersten Abschnitt (80), welcher sich in einer Richtung erstreckt, die eine imaginäre Fortführung der Inneren Oberfläche des Filterelementes (52) an diesem Ende bildet, und einen zweiten Abschnitt einschließt, welcher sich im Wesentlichen senkrecht zu dem ersten Abschnitt erstreckt.

44. Anordnung nach Anspruch 43, worin das Kopfteil (62) einen Körper mit einem hohlen Inneren umfasst, wobei der erste Abschnitt des zweiten Durchlasses (99) durch eine Röhre (80) gebildet wird, welche sich von dem Körper weg erstreckt und wobei der zweite Abschnitt innerhalb des Körpers ausgebildet ist.

45. Anordnung nach Anspruch 44, worin der Körper des Kopfteiles (62) ein erstes plattenförmiges Element (64) und ein zweites plattenförmiges Element (65) umfasst, wobei die ersten und zweiten Elemente (64, 65) voneinander beabstandet sind, um das hohle Innere zu schaffen.

46. Anordnung nach Anspruch 45, worin das erste Element (64) mit einem zugehörigen Ende des Filterelementes (52) verbunden ist.

47. Anordnung nach Anspruch 46, worin das erste Element (64) eine Öffnung (66) zur Verbindung der Mitte des Filterelementes (52) mit dem ersten Durchlass (78) umfasst.

48. Anordnung nach einem der Ansprüche 42 bis 47, worin der erste Durchlass als ein Rohr (78) ausgebildet ist, welches innerhalb einer imaginären Verlängerung der inneren Oberfläche des Filterelementes (52) an diesem Ende liegt.

49. Anordnung nach Anspruch 48, soweit auf Anspruch 47 rückbezogen, worin der Körper eine Fortsetzung des Rohres (78) umfasst, welche an der Öffnung (66) endet.

50. Anordnung nach einem der Ansprüche 45, 46 und 49 oder Anspruch 48, soweit auf Anspruch 45 rückbezogen, worin das erste Element (64) und das zweite Element (65) in jeweils parallelen Ebenen liegen, worin ein Abstandshalterelement (69, 76) das erste und das zweite Element (64, 65) trennt und den zweiten Abschnitt des ersten Durchganges bildet.

51. Anordnung nach Anspruch 50, worin das erste Element (64) einen äußeren Umfangsrand, ausgerichtet auf die äußere Oberfläche des Filterelementes (52), an diesem Ende aufweist.

52. Anordnung nach Anspruch 51, worin das zweite Element (65) einen äußeren Umfangsabschnitt aufweist, welcher sich über den äußeren Umfangsrand des ersten Elementes (64) hinaus erstreckt.

53. Anordnung nach einem der Ansprüche 42 bis 52, welche femer ein Schalenelement (63) umfasst, welches mit dem Kopfteil (62) verbunden ist und das Filterelement (52) aufnimmt, wobei das Gehäuse (50) das Schalenteil (63) enthält.

54. Anordnung nach Anspruch 53, soweit auf Anspruch 52 rückbezogen, worin das Schalenteil (63) mit den im Umfangsbereich des zweiten Elementes (65) des Kopfteiles (62) verbunden ist, welches sich über den Umfangsrand des ersten Elementes (64) hinaus erstreckt.

55. Anordnung nach Anspruch 53 oder 54, worin das Schalenteil (63) selbsttragend ist.

56. Anordnung nach Anspruch 54 oder 55, worin das Gehäuse (50) einen entfembaren Deckel (56) umfasst, welcher das Kopfteil (62) abdeckt.

57. Anordnung nach einem der Ansprüche 42 bis 56, worin das Kopfteil (62) aus einem Kunststoffmaterial gebildet ist.

58. Anordnung nach einem der Ansprüche 42 bis 57, worin das Filterelement (52) zylindrisch mit einer hohlen zylindrischen Mitte und zylindrischen Innen- und Außenoberflächen ist.

59. Anordnung nach einem der Ansprüche 42 bis 58, worin das Filterelement (52) ein erstes Ende aufweist, welches durch das Kopfteil (62) bedeckt ist, und ein zweites Ende aufweist, welches mit einer Endkappe (53) bedeckt ist.

60. Filterelement nach einem der Ansprüche 1 bis 25, 41 oder 42 bis 59, worin das Kopfteil (62) ein erstes Endkappenteil (64) umfasst, welches im Wesentlichen dasselbe ist wie die zweite Endkappe (53), und ein Loch (66) aufweist, welches zu dem ersten Durchgang (78) führt.

61. Filterelement nach Anspruch 60, worin die erste Endkappe (64) mit dem ersten Ende des Filterelementes (52) verbunden ist, um eine Endkappe für das erste Ende zu bilden.

62. Filterelement nach Anspruch 60 oder 61, worin die erste Endkappe (64) und die zweite Endkappe (53) jeweils ein plattenförmiges Element mit ersten und zweiten beabstandeten Oberflächen (67, 68) aufweisen, wobei jede erste Oberfläche (67) an einem zugehörigen Ende des Filterelementes (52) anliegt.

63. Filterelement nach Anspruch 62, worin das Kopfteil (52) einen Körper umfasst, welcher aus der ersten Endkappe (64) und dem zwelten Element (65) beabstandet von der ersten Endkappe (64) gebildet wird.

64. Filterelement nach Anspruch 63, worin die erste Endkappe (64) und das zweite Element (65) mittels mindestens eines Abstandhalters beabstandet sind.

65. Fliterelement nach Anspruch 64, worin der mindestens eine Abstandhalter einstückig mit der ersten Endkappe (64) und dem zweiten Element (65) ausgebildet ist.

66. Filterelement nach Anspruch 65, worin der mindestens eine Abstandhalter auf der zwelten Oberfläche (68) der ersten Endkappe (64) ausgebildet ist, wobei das zweite Element (65) erste und zweite beabstandete Oberflächen (71, 72) aufweist und der mindestens eine Abstandhalter auf der zweiten Oberfläche (72) des zweiten Elementes (65) ausgebildet ist.

67. Filterelement nach einem der Ansprüche 64 bis 66, worin der mindestens eine Abstandhalter als Rippe (69), welche von der zweiten Oberfläche (68) der ersten Endkappe (64) absteht, und als Rippe (76) auf der zweiten Oberfläche (72) des zweiten Elementes (65) ausgebildet ist, wobei die Rippen (69, 76) aufeinander ausgerichtet sind, um den Abstandhalter zu bilden.

68. Filterelement nach Anspruch 67, soweit auf Anspruch 66 rückbezogen, worin die Rippe (69) das Loch (66) in der ersten Endkappe (64) umfährt und ebenfalls ein entsprechendes Loch (74) in dem zweiten Element (65) umfährt und so einen Fließweg durch das Kopfteil von und in Verbindung mit dem ersten Durchlass (78) schafft.

69. Filterelement nach Anspruch 68, worin eine zweite Rippe (70, 77) auf jeder zweiten Oberfläche (68, 72) vorgesehen ist, wobei die zweiten Rippen kontinuierlich sind und die erstgenannten Rippen (69, 76) umfahren, wobei die zweiten Rippen (70, 77) miteinander verbunden sind, um eine geschlossene Kammer zu bilden.

70. Filterelement nach Anspruch 69, worin der zweite Durchlass mit einem Raum zwischen der ersten Endkappe (64) und dem zweiten Element (65) in Verbindung steht, wobei der Raum außerhalb der geschlossenen Kammer ist.

71. Filterelement nach einem der Ansprüche 60 bis 70, worin die erste Endkappe (65) und die zweite Endkappe (53) im Wesentlichen scheibenförmig sind.

72. Filterelement nach Anspruch 71, soweit abhängig von Anspruch 63, worin das zweite Element (65) scheibenförmig ist.

## Revendications

1. Ensemble de filtre comprenant un élément de filtre (12, 52) ayant une première extrémité et une deuxième extrémité, un carter (11, 51) entourant l'élément, le boîtier (11, 51) étant formé par un élément de tète (22, 62) comportant une entrée (27, 80) et une sortie (29, 78) et une cuve autoportante (23, 63) reliée à l'élément de tête (22, 62) et logeant l'élément de filtre (11, 52) et un boîtier (10, 50) contenant le carter (11, 51), **caractérisé en ce que** la première extrémité de l'élément de filtre (12, 52) est montée sur ledit élément de tête (22, 62), avec l'entrée (27, 80) et la sortie (29, 78) sur l'élément de tête (22, 62) s'étendant à travers le boîtier (10, 50) pour la liaison respectivement à une alimentation de fluide à filtrer et un réservoir pour recevoir le fluide filtré.

2. Ensemble selon la revendication 1, dans lequel la cuve (23, 63) est formée à partir d'une matière plastique.

3. Ensemble selon la revendication 2, dans lequel la cuve (23, 63) est formée par moulage à partir d'une matière plastique.

4. Ensemble selon l'une quelconque des revendications 1 à 3, dans lequel la cuve (23, 63) a une épaisseur généralement supérieure à 0,50 mm.

5. Ensemble selon l'une quelconque des revendications 1 à 4, dans lequel l'élément de tête (22, 62) comprend un passage d'entrée (27, 80) formant ladite entrée et un passage de sortie (29, 78) formant ladite sortie, chaque passage (27, 29, 80, 78) ayant une première extrémité et une deuxième extrémité, la première extrémité se terminant à l'intérieur du carter (11, 51) et la deuxième extrémité se terminant à l'extérieur du boîtier (10, 50) en un raccord pour le raccordement à un tuyau.

6. Ensemble selon la revendication 5, dans lequel l'élément de tête (22) est moulé d'une seule pièce à partir d'une matière plastique.

7. Ensemble selon l'une quelconque des revendications 1 à 6, dans lequel l'élément de tête (22, 62) a un corps sensiblement en forme de disque (24, 64) avec deux tubes (27, 29 ; 78, 82) faisant saillie vers le haut dudit corps (24, 64) et s'étendant à travers ledit boîtier (10, 50), un tube (27, 80) formant ladite entrée et l'autre tube (29, 78) formant ladite sortie.

8. Ensemble selon la revendication 7, dans lequel un tube (29, 78) a une longueur axiale supérieure au-dessus du corps par rapport à l'autre tube (27, 80).

9. Ensemble selon l'une quelconque des revendications 1 à 8, dans lequel l'élément de tête (22, 62) et la cuve (23, 63) sont réalisés en matières plastiques, l'élément de tête (22, 62) et la cuve (23, 63) sont soudés ensemble pour former ledit carter (11, 51).

10. Ensemble selon l'une quelconque des revendications 1 à 9, dans lequel l'élément de filtre (12, 52) est généralement cylindrique avec une première extrémité et une deuxième extrémité, la première extrémité étant montée sur l'élément de tête (22, 62) et la deuxième extrémité comportant un bouchon d'extrémité (13, 53) qui obture la deuxième extrémité.

11. Ensemble selon la revendication 10, dans lequel la cuve (23, 63) a une section transversale circulaire.

12. Ensemble selon la revendication 10 ou 11, dans lequel l'entrée (27, 80) communique avec une surface extérieure de l'élément de filtre (12, 52) et la sortie (29, 78) communique avec une surface intérieure de l'élément de filtre (12, 52).

13. Ensemble selon la revendication 12, dans lequel un tube de transfert (44) s'étend de l'entrée (27) à travers l'élément de filtre (12) jusqu'à une sortie (39) dans le bouchon d'extrémité (13) pour le passage du fluide à filtrer jusqu'à la surface extérieure de l'élément de filtre (12, 52).

14. Ensemble selon la revendication 12 ou 13, dans lequel un tube extérieur (43) s'étend entre l'élément de tête (22) et le bouchon d'extrémité (13), le tube extérieur (43) ayant une surface extérieure espacée en direction radiale vers l'intérieur de la surface intérieure de l'élément de filtre (12) pour former un espace annulaire entre celles-ci, la sortie (29) communiquant avec ledit espace annulaire.

15. Ensemble selon la revendication 14 quand elle dépend de la revendication 13, dans lequel le tube de transfert (44) et le tube extérieur (43) sont formés d'une seule pièce, avec le tube de transfert (44) à intérieur du tube extérieur (43).

16. Ensemble selon la revendication 15, dans lequel le tube de transfert (44) et le tube extérieur (43) ont respectivement des sections transversales circulaires avec des axes parallèles.

17. Ensemble selon la revendication 15 ou 16, dans lequel le tube de transfert (44) et le tube extérieur (43) sont produits par co-extrusion à partir d'une matière plastique.

18. Ensemble selon la revendication 17 quand elle dépend de la revendication 9, dans lequel le tube de transfert (44) et le tube extérieur (43) sont soudés à une extrémité à l'élément de tête (22) et à une extrémité opposée à ladite une extrémité au bouchon d'extrémité (13).

19. Ensemble selon la revendication 12, dans lequel l'élément de tête (62) comprend un passage s'étendant en direction radiale menant de l'entrée (80) à la surface extérieure de l'élément de filtre (52).

20. Ensemble selon la revendication 19, dans lequel l'élément de tête (62) est formé à partir d'un bouchon d'extrémité annulaire (64) espacé d'un moulage de tête (65) par au moins une nervure (69, 70) pour former un espace entre ceux-ci, ledit espace formant ledit passage avec l'entrée communiquant avec ledit espace.

21. Ensemble selon la revendication 20, dans laquel la sortie comprend un trou (66) dans le bouchon d'extrémité (64) et un trou (74) dans le moulage de tête (65), chaque trou étant entouré par une nervure (69, 76) respective avec les deux nervures (69, 76) étant en registre et étant interconnectées pour former une portion de la sortie entre les trous (66, 74).

22. Ensemble selon la revendication 21, dans lequel le bouchon d'extrémité (64) et le moulage de tête (65) comprennent chacun une nervure annulaire supplémentaire (70, 77) respective, chaque nervure supplémentaire (70, 77) entourant la rainure associée (69, 76) et les deux nervures supplémentaires (70, 77) étant connectées ensembles pour interconnecter et espacer le bouchon d'extrémité (64) et le moulage de tête (65) et former une chambre annulaire fermée (79).

23. Ensemble selon l'une quelconque des revendications 1 à 22, dans lequel le boîtier (10, 50) comprend un conteneur (15, 55) qui loge la cuve (23, 63) et un couvercle amovible (16, 56) qui ferme le conteneur (15, 55), le couvercle (16, 56) ayant des passages traversant pour l'entrée (27, 80) et la sortie (29, 78).

24. Ensemble selon la revendication 19, dans lequel le boîtier (10, 50) est en métal.

25. Ensemble selon la revendication 23 ou 24, dans lequel la cuve (23, 63) est réalisée en une matière plastique, la cuve (23, 63) et le conteneur (15, 55) étant espacés avant l'utilisation de manière que la dilatation de la cuve (23, 63) lors du passage de fluide à travers celle-ci force la cuve à appuyer contre le conteneur (15, 55) de manière que le conteneur (15, 55) supporte la cuve (23, 63).

26. Ensemble selon l'une quelconque des revendications 1 à 25, dans lequel l'élément de filtre (12, 52) a un centre ouvert à travers lequel le fluide s'écoule dans le parcours de celui-ci entre l'entrée (27, 80) et la sortie (29, 78), le centre contenant un élément (14, 54) qui réduit le volume du centre.

27. Ensemble selon la revendication 26, dans lequel l'élément de filtre (12, 52) comprend un milieu filtrant de forme tubulaire, le centre étant défini par le centre de la forme tubulaire, l'élément (14, 54) s'étendant le long dudit centre.

28. Ensemble selon la revendication 27, dans lequel le milieu filtrant (12, 52) a une surface extérieure et une surface intérieure, l'élément (14, 54) étant espacé de la surface intérieure sur la longueur de celle-ci.

29. Ensemble selon la revendication 27 ou 28, dans lequel le milieu filtrant (12, 52) a une première et une deuxième extrémité, les première et deuxième extrémité étant connectées aux premier et deuxième bouchons d'extrémités (13, 22, 53, 64) respectifs, l'élément (14, 54) s'étendant entre le premier bouchon d'extrémité (13, 53) et le deuxième bouchon d'extrémité (53, 64).

30. Ensemble selon la revendication 29, dans lequel l'élément (14, 54) est relié aux premier et deuxième bouchon d'extrémité (13, 22, 53, 64).

31. Ensemble selon la revendication 29 ou 30, dans lequel un bouchon d'extrémité (22, 64) comprend une ouverture (29, 66) pour l'écoulement de fluide à travers celle-ci, ladite ouverture (29, 66) étant en communication de fluide avec le volume central réduit formé entre l'élément (14, 54) et le milieu filtrant (12, 52).

32. Ensemble selon l'une quelconque des revendications 29 à 31, dans lequel l'élément comprend un tube (14, 54) s'étendant entre les premier et deuxième bouchons d'extrémité (13, 22, 53, 64) et espacé du milieu filtrant (12, 52).

33. Ensemble selon l'une quelconque des revendications 26 à 32, dans lequel l'élément (14) fournit un passage (44) pour faire passer le fluide sur la longueur de l'élément de filtre (12).

34. Ensemble selon la revendication 33 quand elle dépend de la revendication 29, dans lequel l'élément (14) fournit un passage (44) pour faire passer le fluide d'un bouchon d'extrémité (22) à l'autre bouchon d'extrémité (13).

35. Ensemble selon la revendication 34, dans lequel le premier bouchon d'extrémité (22) comprend une ouverture (27) et le deuxième bouchon d'extrémité (13) comprend une ouverture (39), le passage (44) s'étendant entre les ouvertures (27, 39) pour faire passer le fluide d'un bouchon d'extrémité (22) à l'autre bouchon d'extrémité (13) à travers l'élément de filtre (12).

36. Ensemble selon la revendication 33 ou 34, dans lequel ledit passage est formé par un tube (44) s'étendant entre les premier et deuxième bouchons d'extrémité (22, 13).

37. Ensemble selon la revendication 36, dans lequel l'élément (14) est formé par un tube (43, 44), ledit tube fournissant également ledit passage.

38. Ensemble selon la revendication 36, dans lequel l'élément (14) est formé par un tube (43) avec un intérieur, l'intérieur étant subdivisé pour former ledit passage (44).

39. Ensemble selon l'une quelconque des revendications 26 à 38, dans lequel le boîtier (10, 50) comprend un conteneur (15, 55) et un couvercle (16, 56), l'élément de filtre (15, 52) étant logé dans le conteneur (15, 55) et l'entrée et la sortie (27, 80, 29, 78) passent à travers le couvercle (16, 56).

40. Ensemble selon la revendication 39, dans lequel l'élément de filtre (12, 52) est relié à l'élément de tête (22, 62) à une extrémité de l'élément de filtre (12, 52) adjacente audit couvercle (16, 56), une cuve autoportante (23, 63) étant reliée à l'élément de tête (22, 62) et logeant l'élément de filtre (12, 52), le boîtier (10, 50) contenant l'élément de tête (22, 62) et la cuve (23, 63).

41. Ensemble selon l'une quelconque des revendications 26 à 40, dans lequel l'élément de filtre (12, 52) a une première extrémité et une deuxième extrémité, la première extrémité étant fermée par l'élément de tête (22, 62) fournissant une entrée et une sortie (27, 80, 29, 78).

42. Ensemble filtre selon l'une quelconque des revendications 1 à 41, dans lequel un élément de filtre (52) est tubulaire avec un centre creux, une surface intérieure et une surface extérieure, un élément de tête (62) fournissant un bouchon d'extrémité pour une extrémité de l'élément de filtre (52) et fournissant également un premier passage (78) menant au centre de l'élément de filtre (52) et un deuxième passage (99) menant à la surface extérieure de l'élément de filtre (52).

43. Ensemble selon la revendication 42, dans lequel le deuxième passage (99) comprend une première partie (80) s'étendant dans une direction se trouvant dans un prolongement imaginaire de la surface intérieure de l'élément de filtre (52) au niveau de ladite extrémité et une deuxième partie s'étendant généralement perpendiculairement à ladite première partie.

44. Ensemble selon la revendication 43, dans lequel l'élément de tête (62) comprend un corps avec un intérieur creux, la première partie du deuxième passage (99) étant formée par un tube (80) s'étendant à partir dudit corps et la deuxième partie étant formée à l'intérieur dudit corps.

45. Ensemble selon la revendication 44, dans lequel le corps de l'élément de tête (62) comprend un premier élément en forme de plaque (64) et un deuxième élément en forme de plaque (65), les premier et deuxième éléments (64, 65) étant espacés pour former ledit intérieur creux.

46. Ensemble selon la revendication 45, dans lequel le premier élément (64) est relié à une extrémité associée de l'élément de filtre (52).

47. Ensemble selon la revendication 46, dans lequel le premier élément (64) comprend une ouverture (66) pour faire communiquer le centre de l'élément de filtre (52) avec le premier passage (78).

48. Ensemble selon l'une quelconque des revendications 42 à 47, dans lequel le premier passage est formé par un tube (78) se trouvant dans un prolongement imaginaire de la surface intérieure de l'élément de filtre (52) au niveau de ladite extrémité.

49. Ensemble selon la revendication 48 quand elle dépend de la revendication 47, dans lequel le corps comprend un prolongement dudit tube (78) se terminant au niveau de ladite ouverture (66).

50. Ensemble selon l'une quelconque des revendications 45, 46 et 49 ou selon la revendication 48 quand elle dépend de la revendication 45, dans lequel le premier élément (64) et le deuxième élément (65) se trouvent dans des plans parallèles respectifs, un élément d'écartement (69, 76) séparant les premier et deuxième éléments (64, 65) et formant la deuxième partie du premier passage.

51. Ensemble selon la revendication 50, dans lequel le premier élément (64) a un bord périphérique externe mis en registre avec la surface extérieure de l'élément de filtre (52) au niveau de ladite extrémité.

52. Ensemble selon la revendication 51, dans lequel le deuxième élément (65) a une portion périphérique externe qui s'étend au-delà du bord périphérique externe du premier élément (64).

53. Ensemble selon l'une quelconque des revendications 42 à 52 et comprenant une cuve (63) reliée à l'élément de tête (62) et logeant l'élément de filtre (52), le boîtier (50) contenant la cuve (63).

54. Ensemble selon la revendication 53 quand elle dépend de la revendication 52, dans lequel la cuve (63) est reliée à la portion périphérique du deuxième élément (65) de l'élément de tête (62) qui s'étend au-delà du bord périphérique du premier élément (64).

55. Ensemble selon la revendication 53 ou 54, dans lequel la cuve (63) est autoportante.

56. Ensemble selon la revendication 54 ou 55, dans lequel le boîtier (50) comprend un couvercle amovible (56) recouvrant l'élément de tête (62).

57. Ensemble selon l'une quelconque des revendications 42 à 56, dans lequel l'élément de tête (62) est formé à partir d'une matière plastique.

58. Ensemble selon l'une quelconque des revendications 42 à 57, dans lequel l'élément de filtre (52) est cylindrique avec un centre cylindrique creux et des surfaces interne et externe cylindriques.

59. Ensemble selon l'une quelconque des revendications 42 à 58, dans lequel l'élément de filtre (52) a une première extrémité obturée par l'élément de tête (62) et une deuxième extrémité obturée par un bouchon d'extrémité (53).

60. Elément de filtre selon l'une quelconque des revendications 1 à 25, 41 ou 42 à 59, dans lequel l'élément de tête (62) comprend une première partie de bouchon d'extrémité (64) qui est sensiblement la même que ledit deuxième bouchon d'extrémité (53) et a un trou (66) menant au premier passage (78).

61. Elément de filtre selon la revendication 60, dans lequel le premier bouchon d'extrémité (64) est relié à une première extrémité de l'élément de filtre (52) pour fournir un bouchon d'extrémité pour ladite première extrémité.

62. Elément de filtre selon la revendication 60 ou 61, dans lequel le premier bouchon d'extrémité (64) et le deuxième bouchon d'extrémité (53) comprennent chacun un élément en forme de plaque ayant des première et deuxième surfaces espacées (67, 68), chaque première surface (67) étant en about contre une extrémité associée de l'élément de filtre (52).

63. Elément de filtre selon la revendication 62, dans lequel l'élément de tête (52) comprend un corps formé par ledit premier bouchon d'extrémité (64) et un deuxième élément (65) espacé dudit premier bouchon d'extrémité (64).

64. Elément de filtre selon la revendication 63, dans lequel le premier bouchon d'extrémité (64) et le deuxième élément (65) sont espacés par au moins un élément d'écartement.

65. Elément de filtre selon la revendication 64, dans lequel ladite au moins une pièce d'écartement est formée d'une seule pièce avec le premier bouchon d'extrémité (64) et le deuxième élément (65).

66. Elément de filtre selon la revendication 65, dans lequel ladite au moins une pièce d'écartement est formée sur la deuxième surface (68) du premier bouchon d'extrémité (64), le deuxième élément (65) ayant des première et deuxième surfaces espacées (71, 72) et au moins une pièce d'écartement étant formée sur la deuxième surface (72) du deuxième élément (65).

67. Elément de filtre selon l'une quelconque des revendications 64 à 66, dans lequel la au moins une pièce d'écartement est formée par une nervure (69) faisant saillie de la deuxième surface (68) du premier bouchon d'extrémité (64) et une nervure (76) sur la deuxième surface (72) du deuxième élément (65), les nervures (69, 76) étant mises en registre pour former ladite pièce d'écartement.

68. Elément de filtre selon la revendication 67 quand elle dépend de la revendication 66, dans lequel ladite nervure (69) entoure le trou (66) dans le premier bouchon d'extrémité (64) et entoure également un trou correspondant (74) dans le deuxième élément (65) en formant ainsi un parcours de fluide à travers l'élément de tête à partir de et communicant avec le premier passage (78).

69. Elément de filtre selon la revendication 68, dans lequel une deuxième nervure (70, 77) est prévue sur chaque deuxième surface (68, 72), les deuxièmes nervures (70, 77) étant continues et entourant les nervures précitées (69, 76), les deuxièmes nervures (70, 77) étant reliées l'une à l'autre pour former une chambre fermée.

70. Elément de filtre selon la revendication 69, dans lequel le deuxième passage communique avec un espace entre le premier bouchon d'extrémité (64) et le deuxième élément (65), ledit espace étant à l'extérieur de ladite chambre fermée.

71. Elément de filtre selon l'une quelconque des revendications 60 à 70, dans lequel le premier bouchon d'extrémité (65) et le deuxième bouchon d'extrémité (53) ont sensiblement une forme de disque.

72. Elément de filtre selon la revendication 71 quand elle dépend de la revendication 63, dans lequel le deuxième élément (65) a une forme de disque.

73. Elément de filtre selon la revendication 72, dans lequel le deuxième élément (65) a un diamètre supérieur au premier bouchon d'extrémité (64) de manière qu'une portion périphérique du deuxième élément (65) fait saillie au-delà d'un bord périphérique du premier bouchon d'extrémité (64).

74. Elément de filtre selon l'une quelconque des revendications 60 à 73, comprenant une cuve (53) reliée à l'élément de tête (62) et logeant l'élément de filtre (52).

75. Elément de filtre selon la revendication 74 quand elle dépend de la revendication 73, dans lequel la cuve (53) est reliée à la portion périphérique du deuxième élément (65) qui s'étend au-delà du bord périphérique du premier bouchon d'extrémité (64).
